# EUROPEAN PATENT APPLICATION

(11) **EP 2 966 285 A1**
(43) Date of publication of application: **13.01.2016**
(21) Application number: 15175047.8
(22) Date of filing: 02.07.2015
(51) Int. Cl.: F02D 41/08, F02P 5/15, F02D 41/14, F02D 41/16, F02D 41/02, F02D 37/02, F02P 5/04, F02D 41/40, F02N 11/08

(54) **VEHICLE CONTROL DEVICE AND VEHICLE CONTROL METHOD**

(30) Priority: 02.07.2014 JP 2014137109
(71) Applicant: Toyota Jidosha Kabushiki Kaisha, Toyota-shi, Aichi-ken 471-8571 (JP)
(72) Inventor: ENOMOTO, Hiroshi, Aichi-ken, 471-8571 (JP); FURUYA, Yoshihiro, Aichi-ken, 471-8571 (JP)
(74) Representative: D Young & Co LLP

(57) **Abstract**

A control device for a vehicle (1) including an internal combustion engine (10), drive wheels (30), and brake devices (40) includes an electronic control unit (60) configured to: execute braking force maintaining control for operating the brake devices; execute first or second idling control for converging an engine speed to a first or second target idling speed respectively; restart the engine and execute the second idling control (S24) when executing the braking force maintaining control (S23), while the vehicle is stopped; restart the engine and execute the first idling control (S25) without executing the braking force maintaining control (S23), while the vehicle is traveling; and execute engine speed control for setting the first target idling speed (NEB) higher than the second target idling speed (NEA), in a state where drive torque output from the engine is transmitted to the drive wheels.

## Description

### BACKGROUND OF THE INVENTION

### 1. Field of the Invention

The invention relates to a vehicle control device configured to execute idling control, and relates also to a vehicle control method for executing idling control.

### 2. Description of Related Art

Japanese Patent Application Publication No. 2013-083232 (JP 2013-083232 A) describes a vehicle in which idle reduction control is executed. According to the idle reduction control described in JP 2013-083232 A, the operation of an internal combustion engine is automatically stopped when the vehicle stops traveling in response to depression of a brake pedal, and the internal combustion engine is automatically restarted when the depression of the brake pedal is cancelled. After the internal combustion engine is automatically restarted, idling control is executed to converge the engine speed to a target idling speed on the condition that an accelerator pedal is not depressed.

In the vehicle in which the aforementioned idle reduction control is executed, braking force maintaining control is executed to maintain braking forces by operating brake devices of the vehicle while the internal combustion engine is automatically stopped and while the idling control is being executed after the internal combustion engine is automatically restarted. Consequently, when the vehicle is restarted while being stopped on an uphill road, the vehicle is inhibited from moving downward.

Japanese Patent Application Publication No. 2013-122171 (JP 2013-122171 A) describes idle reduction control for automatically stopping the operation of an internal combustion engine when a vehicle is decelerated to a traveling speed of a prescribed value or lower even while the vehicle is creeping. According to the idle reduction control described in JP 2013-122171 A, the operation of the internal combustion engine is stopped more often than in the technique described in JP 2013-083232 A. Thus, according to the idle reduction control described in JP 2013-122171 A, the fuel efficiency is further improved.

However, even when the operation of the internal combustion engine is automatically stopped during traveling of the vehicle as in JP 2013-122171 A, it is necessary to rapidly shift the vehicle to an acceleration state when an accelerator pedal is depressed. Thus, the above-described braking force maintaining control is not executed until the vehicle stops traveling.

During execution of the idling control, the engine speed is controlled so as to coincide with a target idling speed. On the other hand, the actual engine speed constantly varies within a prescribed engine speed range. Thus, the drive torque transmitted to drive shafts of the vehicle from the internal combustion engine does not become exactly constant and may vary like the engine speed. Many frequency components within a range of frequencies of vibrations of the drive shafts due to the drive torque variations overlap with the frequency components within a range of frequencies of torsional vibrations of the drive shafts (hereinafter, referred to as "drive shaft resonance frequency range"). However, restrictions on the design of the drive shafts make it difficult to change the drive shaft resonance frequency range as needed such that the above-described overlap is avoided.

Thus, when the shift position of a transmission is a drive position, that is, when the vehicle is in a state where the drive torque output from the internal combustion engine is transmitted to drive wheels of the vehicle, the above-described variations in the drive torque are transmitted to the drive shafts as excitation force. This may cause resonance with torsional vibrations of the drive shafts. Occurrence of such resonance of the drive shafts raises a possibility that the drive wheels will vibrate in its rotation direction, so that the vehicle will vibrate in its longitudinal direction.

In the idling control that is executed after the internal combustion engine is restarted while the vehicle is stopped, the braking force maintaining control is executed. Thus, vibrations of the drive wheels in its rotation direction are reduced by the braking forces, so that vibrations of the vehicle are less likely to occur. On the other hand, in the idling control that is executed after the internal combustion engine is restarted while the vehicle is traveling, the braking force maintaining control is not executed. Thus, the possibility that vibrations of the vehicle in its longitudinal direction will occur due to the resonance of the drive shafts as described above cannot be ignored.

Immediately after restart of the internal combustion engine is completed, variations in the engine speed are large and thus the amplitude of the resonance of the drive shafts is also large. As a result, the above-described vibrations of the vehicle in its longitudinal direction are likely to be more obvious.

### SUMMARY OF THE INVENTION

The invention provides a vehicle control device configured to reduce vibrations of a vehicle in its longitudinal direction when automatically restarting an internal combustion engine and executing idling control while the vehicle is traveling.

A first aspect of the invention relates to a control device for a vehicle including an internal combustion engine, drive wheels, and brake devices. The control device includes an electronic control unit configured to: (i) execute braking force maintaining control for operating the brake devices; (ii) execute first idling control for converging an engine speed to a first target idling speed while the vehicle is traveling; (iii) execute second idling control for converging the engine speed to a second target idling speed while the vehicle is stopped; (iv) restart the internal combustion engine and execute the second idling control when executing the braking force maintaining control, while the vehicle is stopped; (v) restart the internal combustion engine and execute the first idling control without executing the braking force maintaining control, while the vehicle is traveling; and (vi) execute engine speed control for setting the first target idling speed to be achieved by the first idling control to an engine speed higher than the second target idling speed to be achieved by the second idling control, in a state where drive torque output from the internal combustion engine is transmitted to the drive wheels.

According to the first aspect, through the execution of the engine speed control, the first target idling speed to be achieved by the first idling control is set to a value higher than the second target idling speed to be achieved by the second idling control. As a result, when the first idling control is executed, the range of frequencies of drive shaft vibrations due to variations in the drive torque output from the internal combustion engine is shifted to a frequency range higher than that when the second idling control is executed. Thus, the amount of overlap between the range of frequencies of drive shaft vibrations due to drive torque variations and the drive shaft resonance frequency range is reduced. Consequently, resonance of the drive shafts is less likely to occur. As a result, it is possible to reduce vibrations of the vehicle in its longitudinal direction when the first idling control is executed. Because the target idling speed is not uniformly increased, an increase in the fuel consumption due to an increase in the idling speed is minimized. Further, a misfire due to an excessive decrease in the engine speed during the execution of the first idling control does not occur, unlike in the case where the resonance of the drive shafts is reduced by reducing the first target idling speed to be achieved by the first idling control, so that the range of frequencies of drive shaft vibrations due to variations in the drive torque is shifted to a lower frequency range so as to be offset from the drive shaft resonance frequency range.

In the control device according to the first aspect, the electronic control unit may be configured to converge the engine speed to the first target idling speed set by the engine speed control, by controlling ignition timing of the internal combustion engine such that the ignition timing when the first idling control is executed is advanced with respect to the ignition timing when the second idling control is executed. With this configuration, the engine speed is converged to the first target idling speed set by the engine speed control.

In the control device described above, the electronic control unit may be configured to set a maximum retardation degree such that the maximum retardation degree when the first idling control is executed is smaller than the maximum retardation degree when the second idling control is executed. The maximum retardation degree is a maximum value of a retardation degree by which the ignition timing is retarded with respect to reference ignition timing obtained based on an operating condition of the internal combustion engine. With this configuration, the maximum retardation degree is reduced, and thus the retardation degree by which the ignition timing is retarded when the feedback control of the ignition timing is executed is limited. Thus, when the engine speed is higher than the first target idling speed to be achieved by the first idling control, the period of time required for the engine speed to converge to the first target idling speed is prolonged. Hence, the engine speed fluctuates above and below an engine speed higher than the first target idling speed. As a result, it is possible to further reduce the amount of overlap between the range of frequencies of drive shaft vibrations due to drive torque variations and the drive shaft resonance frequency range. Consequently, the resonance of the drive shafts and vibrations of the vehicle in its longitudinal direction due to such resonance are further reduced.

In the control device described above, the electronic control unit may be configured to execute feedback control of the ignition timing such that the ignition timing converges to target ignition timing, and the electronic control unit may be configured to set a feedback gain used in the feedback control such that the feedback gain when the first idling control is executed is smaller than the feedback gain when the second idling control is executed. With this configuration, the feedback gain is reduced, and thus the retardation degree by which the ignition timing is retarded when the feedback control of the ignition timing is executed is reduced. Thus, when the engine speed is higher than the first target idling speed, the time required for the engine speed to converge to the first target idling speed is prolonged. Hence, the engine speed fluctuates above and below an engine speed higher than the first target idling speed. As a result, it is possible to further reduce the amount of overlap between the range of frequencies of drive shaft vibrations due to drive torque variations and the drive shaft resonance frequency range. Consequently, the resonance of the drive shafts and vibrations of the vehicle in its longitudinal direction due to such resonance are further reduced.

A second aspect of the invention relates to a control method for a vehicle including an internal combustion engine, drive wheels, and brake devices. The control method includes: executing braking force maintaining control for operating the brake devices; executing first idling control for converging an engine speed to a first target idling speed while the vehicle is traveling; executing second idling control for converging the engine speed to a second target idling speed while the vehicle is stopped; restarting the internal combustion engine and executing the second idling control when executing the braking force maintaining control, while the vehicle is stopped; restarting the internal combustion engine and executing the first idling control without executing the braking force maintaining control, while the vehicle is traveling; and executing engine speed control for setting the first target idling speed to be achieved by the first idling control to an engine speed higher than the second target idling speed to be achieved by the second idling control, in a state where drive torque output from the internal combustion engine is transmitted to the drive wheels.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically illustrating the configuration of a vehicle and a control device for the vehicle according to an embodiment of the invention;
FIG. 2 is a flowchart illustrating an example of the procedure of engine speed control according to the embodiment;
FIG. 3 is a time-series chart illustrating variations in the engine speed during the execution of during-traveling restart control, first idling control, and engine speed control according to the embodiment;
FIG. 4 is a graph illustrating the relationship between a drive shaft resonance frequency range and a range of frequencies of vibrations of drive shafts due to variations in the drive torque output from an internal combustion engine, according to the embodiment; and
FIG. 5 is a time-series chart illustrating variations in the vehicle acceleration during the execution of the during-traveling restart control, the first idling control, and the engine speed control, according to the embodiment.

### DETAILED DESCRIPTION OF EMBODIMENTS

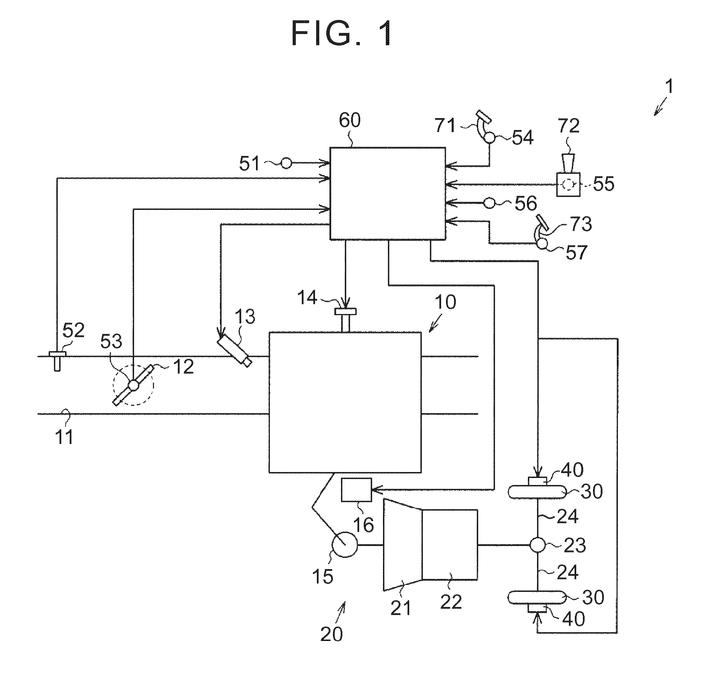

Hereinafter, the configuration of a vehicle 1 to be controlled by an electronic control unit 60 according to an embodiment of the invention will be described with reference to FIG. 1. As illustrated in FIG. 1, the vehicle 1 includes an internal combustion engine 10, a power train 20, and brake devices 40. The internal combustion engine 10 outputs drive torque to be transmitted to drive wheels 30. The power train 20 transmits the drive torque from a crankshaft 15 to the drive wheels 30. The brake devices 40 apply braking forces to the drive wheels 30. The vehicle 1 further includes an accelerator pedal 71, a shift lever 72, and a brake pedal 73 that are operated by a driver. The internal combustion engine 10 includes ignition devices 14 that ignite an air-fuel mixture. A throttle valve 12 and fuel injection valves 13 are provided in an intake passage 11 of the internal combustion engine 10. A starter motor 16 is disposed near the crankshaft 15. The starter motor 16 is used to rotate the crankshaft 15 to start the internal combustion engine 10.

The power train 20 includes a torque converter 21, an automatic transmission 22, a differential gear device 23, and drive shafts 24. The torque converter 21 is connected to the crankshaft 15. The automatic transmission 22 is connected to the torque converter 21. The differential gear device 23 is connected to the automatic transmission 22. The drive shafts 24 connect the differential gear device 23 to the drive wheels 30. While the operation position of the shift lever 72 is a drive position and the operation of the internal combustion engine 10 is automatically stopped through the execution of idle reduction control, oil is supplied to the automatic transmission 22 from an electrically-driven oil pump (not illustrated). Thus, even while the idle reduction control is being executed, an engaged state of the automatic transmission 22 is maintained, so that the drive torque output from the internal combustion engine 10 is transmitted to the drive wheels 30.

The vehicle 1 further includes the electronic control unit 60 configured to control the vehicle 1 based on signals output from, for example, an engine speed sensor 51, an intake air amount sensor 52, a throttle opening degree sensor 53, an accelerator operation amount sensor 54, an operation position sensor 55 that detects an operation position of the shift lever 72, a vehicle speed sensor 56, and a brake operation amount sensor 57.

Hereinafter, various controls executed by the electronic control unit 60 will be described. First, the idle reduction control will be described. The idle reduction control executed by the electronic control unit 60 includes automatic stop control for automatically stopping the operation of the internal combustion engine 10, and restart control for automatically restarting the internal combustion engine 10 the operation of which has been stopped through the execution of the automatic stop control.

The electronic control unit 60 starts the automatic stop control when a prescribed automatic stop condition is satisfied during the operation of the internal combustion engine 10. In the automatic stop control, the operation of the internal combustion engine 10 is automatically stopped by stopping fuel injection from the fuel injection valves 13. For example, Conditions a) to c) described below are used as conditions for determining that the automatic stop condition is satisfied.

Condition a) is a condition that a state where the vehicle speed is lower than a reference value has continued for a certain period of time or longer. Condition b) is a condition that the brake pedal 73 is depressed. Condition c) is a condition that the accelerator pedal 71 is not depressed.

The reference value in Condition a) is a value (e.g. 2 km/h) for determining whether the vehicle 1 is sufficiently decelerated and there is a high possibility that the vehicle 1 will stop. The electronic control unit 60 determines that the automatic stop condition is satisfied, when, for example, Condition a) and Condition b) are satisfied or Condition a) and Condition c) are satisfied during the operation of the internal combustion engine 10.

The electronic control unit 60 determines whether or not a prescribed automatic restart condition is satisfied while the operation of the internal combustion engine 10 is automatically stopped through the execution of the automatic stop control. When the automatic restart condition is satisfied, the electronic control unit 60 starts the restart control for automatically restarting the internal combustion engine 10 by driving the starter motor 16.

Specifically, when a during-stop restart condition (i.e. a restart condition for a stopped vehicle) is satisfied as the automatic restart condition, the electronic control unit 60 executes during-stop restart control (i.e. restart control for a stopped vehicle). When the vehicle speed is zero (km/h) and, for example, Condition b) or Condition c) becomes no longer satisfied, the electronic control unit 60 determines that the during-stop restart condition is satisfied.

When a during-traveling restart condition (i.e. a restart condition for a traveling vehicle) is satisfied as the automatic restart condition, the electronic control unit 60 executes during-traveling restart control (i.e. restart control for a traveling vehicle). When the vehicle speed is higher than zero (kn/h) and, for example, at least one of Conditions a) to c) becomes no longer satisfied, the electronic control unit 60 determines that the during-traveling restart condition is satisfied.

Next, idling control will be described. After the restart of the internal combustion engine 10 is completed through the execution of the during-stop restart control or the during-traveling restart control, the electronic control unit 60 executes the idling control for converging the engine speed to a target idling speed, on the condition that the accelerator pedal 71 is not depressed. The electronic control unit 60 converges the engine speed to the target idling speed, for example, by executing feedback control of the ignition timing of the internal combustion engine 10.

For example, the electronic control unit 60 retards the ignition timing of the internal combustion engine 10 to reduce the engine speed toward the target idling speed. On the other hand, the electronic control unit 60 advances the ignition timing of the internal combustion engine 10 to increase the engine speed toward the target idling speed. In the following description, the idling control executed upon completion of the during-traveling restart control will be referred to as "first idling control", and the idling control executed upon completion of the during-stop restart control will be referred to as "second idling control".

Next, braking force maintaining control will be described. While the vehicle 1 is stopped, the electronic control unit 60 restarts the internal combustion engine 10 and executes the second idling control while executing the braking force maintaining control for operating the brake devices 40 of the vehicle 1. While the vehicle 1 is traveling, the electronic control unit 60 restarts the internal combustion engine 10 and executes the first idling control without executing the braking force maintaining control.

Next, engine speed control will be described. The electronic control unit 60 executes, in addition to the above-described controls, the engine speed control for setting a first target idling speed NEB, which is a target idling speed to be achieved by the first idling control, to an engine speed higher than a second target idling speed NEA, which is a target idling speed to be achieved by the second idling control. The engine speed control is executed on the condition that the operation position of the shift lever 72 detected by the operation position sensor 55 is the drive position, that is, the vehicle 1 is in the state where the drive torque output from the internal combustion engine 10 is transmitted to the drive wheels 30.

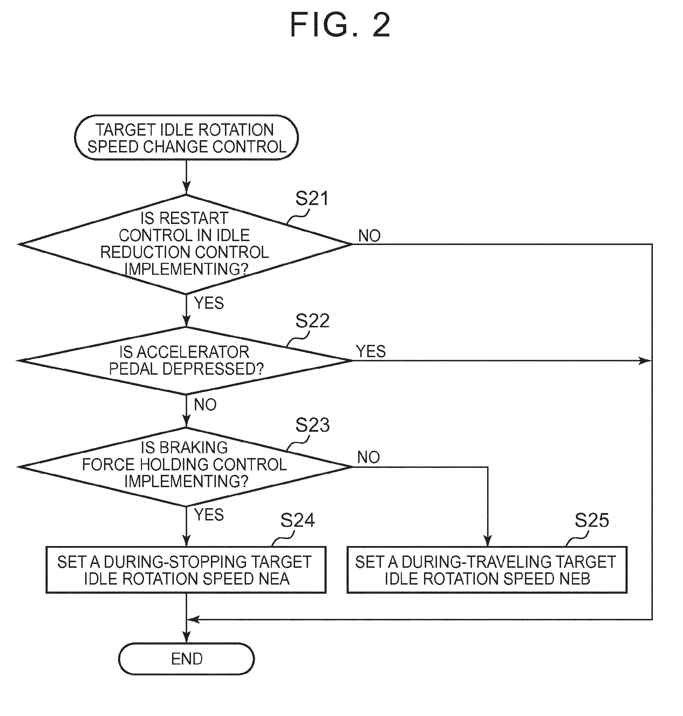

Next, with reference to FIG. 2, the procedure of the engine speed control (steps S21 to S25) will be described in detail. In step S21, the electronic control unit 60 determines whether or not the restart control in the idle reduction control is being executed, that is, whether or not the during-stop restart control or the during-traveling restart control is being executed. The electronic control unit 60 determines that the restart control in the idle reduction control is being executed, when the electronic control unit 60 determines that the internal combustion engine 10 has been stopped due to the satisfaction of the automatic stop condition based on Conditions a) to c) described above. On the other hand, the electronic control unit 60 determines that the restart control in the idle reduction control is not being executed, when the electronic control unit 60 determines that the internal combustion engine 10 has been stopped due to a reason other than the satisfaction of the automatic stop condition, such as, for example, turning-off of an ignition switch. The electronic control unit 60 ends the current routine when the electronic control unit 60 determines that the restart control in the idle reduction control is not being executed (NO in step S21). On the other hand, the electronic control unit 60 executes a process in step S22 when the electronic control unit 60 determines that the restart control in the idle reduction control is being executed (YES in step S21).

In step S22, the electronic control unit 60 determines whether or not the accelerator pedal 71 is depressed, based on a signal output from the accelerator operation amount sensor 54. The electronic control unit 60 ends the current routine when the electronic control unit 60 determines that the accelerator pedal 71 is depressed (YES in step S22). On the other hand, the electronic control unit 60 executes a process in step S23 when the electronic control unit 60 determines that the accelerator pedal 71 is not depressed (NO in step S22).

In step S23, the electronic control unit 60 determines whether or not the braking force maintaining control is being executed. The electronic control unit 60 determines that the braking force maintaining control is being executed, when the vehicle speed determined based on a signal output from the vehicle speed sensor 56 is zero (km/h). On the other hand, the electronic control unit 60 determines that the braking force maintaining control is not being executed, when the vehicle speed determined based on a signal output from the vehicle speed sensor 56 is higher than zero (km/h). The electronic control unit 60 executes a process in step S24 when the electronic control unit 60 determines that the braking force maintaining control is being executed (YES in step S23). In step S24, the electronic control unit 60 computes a target idling speed reference value NE (hereinafter, referred to as "reference value NE") as a compatible value for a target idling speed to be achieved by the idling control, based on the operating conditions of the internal combustion engine 10, such as an engine coolant temperature. Then, in step S24, the electronic control unit 60 sets the reference value NE as the second target idling speed NEA.

On the other hand, the electronic control unit 60 executes a process in step S25 when the electronic control unit 60 determines in step S23 that the braking force maintaining control is not being executed (NO in step S23). In step S25, the electronic control unit 60 computes a reference value NE as in the process in step S24. Then, in step S25, the electronic control unit 60 sets a value (= NE + ΔNE) obtained by adding a prescribed value ΔNE to the reference value NE, as the first target idling speed NEB.

The prescribed value ΔNE is set in advance as a value to be added to the reference value NE. By adding the prescribed value ΔNE to the reference value NE, a range of frequencies of vibrations of the drive shafts 24 due to variations of the drive torque output from the internal combustion engine 10 caused by variations in the engine speed (hereinafter, referred to as "range of frequencies of drive shaft vibrations due to drive torque variations" where appropriate) is shifted to a higher frequency range when the first idling control is executed. Thus, the amount of overlap between the range of frequencies of drive shaft vibrations due to drive torque variations and a range of frequencies of torsional vibrations of the drive shafts 24 (hereinafter, referred to as "drive shaft resonance frequency range") is reduced.

By adding the prescribed value ΔNE to the reference value NE as described above, the first target idling speed NEB is set to a speed higher than the second target idling speed NEA. The electronic control unit 60 ends the current routine after setting, in step S24, the second target idling speed NEA to be achieved by the second idling control or after setting, in step S25, the first target idling speed NEB to be achieved by the first idling control.

After the restart of the internal combustion engine 10 is completed, the electronic control unit 60 executes the second idling control or the first idling control on the condition that the accelerator pedal 71 is not depressed. That is, the electronic control unit 60 executes feedback control of the ignition timing such that the engine speed converges to the second target idling speed NEA or the first target idling speed NEB. As described above, the first target idling speed NEB is set to a value higher than the second target idling speed NEA. Thus, when the first idling control is executed, the ignition timing is set to a timing which is advanced with respect to the ignition timing when the second idling control is executed.

After the variations in the drive torque output from the internal combustion engine 10 are reduced to be sufficiently small with the lapse of a prescribed period of time from the start of the first idling control, the electronic control unit 60 gradually reduces the first target idling speed NEB toward the reference value NE.

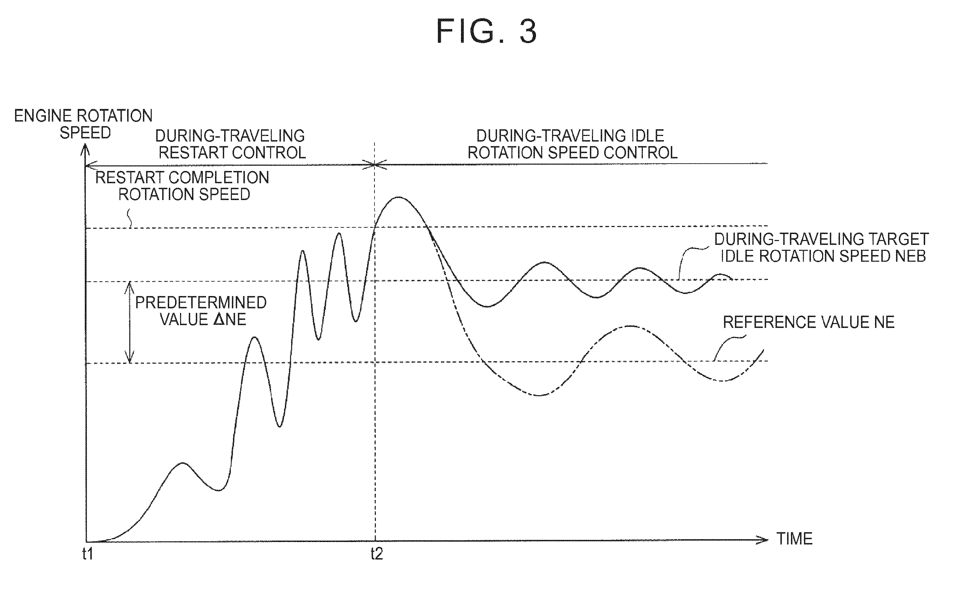

Next, with reference to FIG. 3 to FIG. 5, the operation and advantageous effects of the present embodiment will be described. As indicated by a solid line in FIG. 3, after the during-traveling restart control is started at time t1, the engine speed gradually increases. Then, when the engine speed reaches a restart completion engine speed and thus the restart is completed, the first idling control is started (time t2).

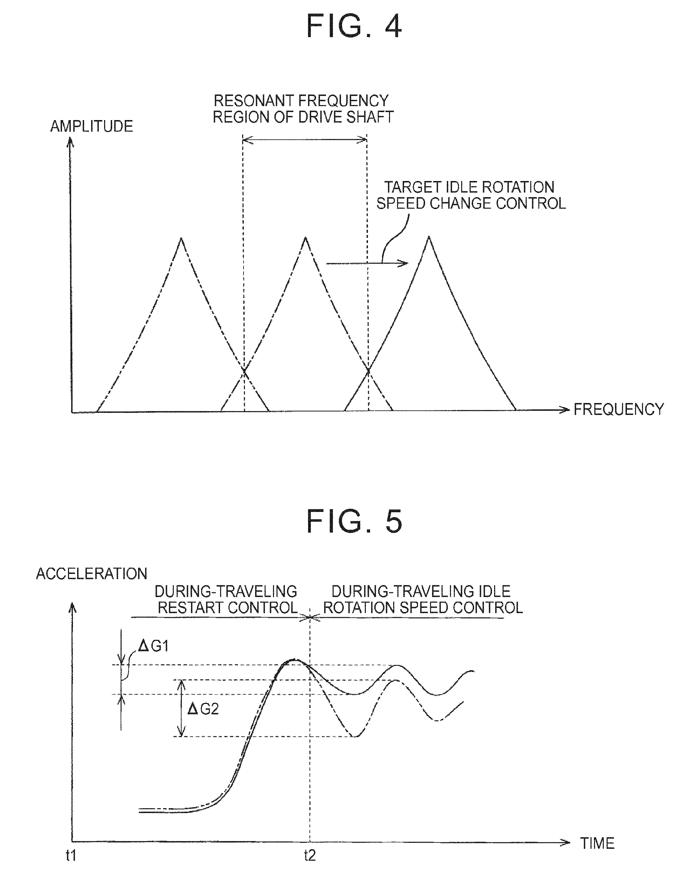

If the first target idling speed NEB is equal to the reference value NE which is set as the second target idling speed NEA, the engine speed undergoes a change as indicated by a two-dot chain line in FIG. 3. In this case, many frequency components within the range of frequencies of drive shaft vibrations due to variations in the drive torque output from the internal combustion engine 10 caused by variations in the engine speed overlap with the frequency components within the drive shaft resonant frequency range as indicated by a one-dot chain line in FIG. 4. Consequently, resonance of the drive shafts 24 occurs, so that, as indicated by a two-dot chain line in FIG. 5, an amount ΔG2 (hereinafter, referred to as "acceleration variation amount ΔG2") of variations in the acceleration, which occur due to vibrations of the vehicle 1 in its longitudinal direction, is large.

On the other hand, in the present embodiment, through the execution of the engine speed control, the first target idling speed NEB is set to a value higher than the second target idling speed NEA, that is, set to the sum of the reference value NE and the prescribed value ΔNE.

Thus, as indicated by a solid line in FIG. 4, the range of frequencies of drive shaft vibrations due to variations in the drive torque output from the internal combustion engine 10 caused by variations in the engine speed, is shifted to a frequency range higher than the drive shaft resonance frequency range. Thus, the amount of overlap between the range of frequencies of drive shaft vibrations due to drive torque variations and the drive shaft resonance frequency range is reduced. Consequently, resonance of the drive shafts 24 is less likely to occur. As a result, as indicated by a solid line in FIG. 5, vibrations of the vehicle 1 in its longitudinal direction are made smaller than those when the first target idling speed NEB is equal to the reference value NE which is set as the second target idling speed NEA. Thus, an amount ΔG1 (hereinafter, referred to as "acceleration variation amount ΔG1") of variations in the acceleration, which occur due to vibrations of the vehicle 1 in its longitudinal direction, is made smaller than the acceleration variation amount ΔG1.

Because the reference value NE is set as the second target idling speed NEA, that is, because the target idling speed is not uniformly increased, an increase in the fuel consumption due to an increase in the idling speed is minimized. Further, a misfire due to an excessive decrease in the engine speed during the execution of the first idling control does not occur, unlike in the case where the resonance of the drive shafts 24 is reduced by setting the first target idling speed NEB to a value lower than the reference value NE, so that the range of frequencies of drive shaft vibrations due to variations in the drive torque output from the internal combustion engine 10 is shifted to a lower frequency range so as to be offset from the drive shaft resonance frequency range as indicated by a two-dot chain line in FIG. 4.

In the present embodiment, the engine speed during execution of the first idling control is set higher than the engine speed during execution of the second idling control. Thus, according to the present embodiment, the drive torque output from the internal combustion engine 10 when the vehicle 1 creeps is increased. This makes it possible to rapidly shift the vehicle 1 to an acceleration state when the accelerator pedal 71 is depressed.

The foregoing embodiment may be modified as follows. The following modified examples may be combined with each other as long as any technical contradictions do not arise. In the foregoing embodiment, the electronic control unit 60 executes feedback control of the ignition timing to converge the engine speed to the first target idling speed NEB set through the engine speed control. In the feedback control, preferably, the maximum retardation degree when the first idling control is executed is set smaller than the maximum retardation degree when the second idling control is executed. The maximum retardation degree is the maximum value of the retardation degree by which the ignition timing is retarded with respect to reference ignition timing, such as minimum spark advance for best torque (MBT), which is obtained based on the operating conditions of the internal combustion engine 10.

By reducing the maximum retardation degree as described above, the retardation degree by which the ignition timing is retarded when the feedback control of the ignition timing is executed is limited. Thus, when the engine speed is higher than the first target idling speed NEB, the period of time required for the engine speed to converge to the first target idling speed NEB is prolonged. Hence, the engine speed fluctuates above and below an engine speed higher than the first target idling speed NEB. As a result, it is possible to further reduce the amount of overlap between the range of frequencies of drive shaft vibrations due to drive torque variations and the drive shaft resonance frequency range. Consequently, the resonance of the drive shafts 24 and vibrations of the vehicle 1 in its longitudinal direction due to such resonance are further reduced.

Further, a feedback gain used in the feedback control of the ignition timing, which is executed to converge the ignition timing to target ignition timing, may be set such that the feedback gain when the first idling control is executed is smaller than the feedback gain when the second idling control is executed. By reducing the feedback gain as described above, the retardation degree by which the ignition timing is retarded when the feedback control of the ignition timing is executed is reduced. Thus, when the engine speed is higher than the first target idling speed NEB, the time required for the engine speed to converge to the first target idling speed NEB is prolonged. Hence, the engine speed fluctuates above and below an engine speed higher than the first target idling speed NEB. As a result, it is possible to further reduce the amount of overlap between the range of frequencies of drive shaft vibrations due to drive torque variations and the drive shaft resonance frequency range. Consequently, the resonance of the drive shafts 24 and vibrations of the vehicle 1 in its longitudinal direction due to such resonance are further reduced.

In the idling control, the engine speed is converged to a target idling speed by changing the intake air amount. In this case, in order to increase the engine speed toward the target idling speed, the throttle valve 12 is controlled such that the intake air amount is increased. On the other hand, in order to reduce the engine speed toward the target idling speed, the throttle valve 12 is controlled such that the intake air amount is reduced.

Within a period from the start of the during-traveling restart control to the start of the first idling control, the opening degree of the throttle valve 12 is reduced such that the intake air amount is made smaller than that within a period from the start of the during-stop restart control to the start of the second idling control, or the ignition timing is retarded with respect to the ignition timing within the period from the start of the during-stop restart control to the start of the second idling control. When the internal combustion engine 10 is provided with fuel injection valves 13 that inject fuel directly into combustion chambers of the internal combustion engine 10, the fuel is injected in a compression stroke within a period from the start of the during-traveling restart control to the start of the first idling control. Further, within the period from the start of the during-traveling restart control to the start of the first idling control, the fuel injection timing is advanced with respect to the ignition timing within the period from the start of the during-stop restart control to the start of the second idling control. The method of reducing the intake air amount, the method of retarding the ignition timing, and the method of advancing the fuel injection timing in stratified charge combustion may be combined with each other.

According to the foregoing modified example, the rate of increase in the engine speed when the during-traveling restart control is executed is lower than the rate of increase in the engine speed when the during-stop restart control is executed. As a result, the amount of decrease in the engine speed in the first idling control immediately after the completion of the restart of the internal combustion engine 10 is made smaller than the amount of decrease in the engine speed in the second idling control. Consequently, it is possible to reduce variations in the engine speed, that is, variations in the drive torque, due to a rapid decrease in the engine speed immediately after the completion of the restart of the internal combustion engine 10.

When vibrations of the vehicle 1 in its longitudinal direction occur, the internal combustion engine 10 may be controlled in the following manner in order to reduce such vibrations of the vehicle 1. For example, an acceleration of the vehicle 1 is detected by an acceleration sensor. When the acceleration in the forward traveling direction of the vehicle 1 occur, the internal combustion engine 10 is controlled such that the engine speed is reduced. On the other hand, when the acceleration in the backward traveling direction of the vehicle 1 occur, the internal combustion engine 10 is controlled such that the engine speed is increased. Examples of a method of changing the engine speed of the internal combustion engine 10 as described above include a method of changing at least one of the target idling speed, the ignition timing of the internal combustion engine 10, the intake air amount, and the fuel injection amount.

The vehicle 1 may be provided with a brake lever and an accelerator lever that are operated by a driver's hand, instead of the brake pedal 73 and the accelerator pedal 71.

## Claims

1. A control device for a vehicle (1) including an internal combustion engine (10), drive wheels (30), and brake devices (40), the control device **characterized by** comprising an electronic control unit (60) configured to:
(i) execute braking force maintaining control for operating the brake devices;
(ii) execute first idling control for converging an engine speed to a first target idling speed while the vehicle is traveling;
(iii) execute second idling control for converging the engine speed to a second target idling speed while the vehicle is stopped;
(iv) restart the internal combustion engine and execute the second idling control when executing the braking force maintaining control, while the vehicle is stopped;
(v) restart the internal combustion engine and execute the first idling control without executing the braking force maintaining control, while the vehicle is traveling; and
(vi) execute engine speed control for setting the first target idling speed to an engine speed higher than the second target idling speed, in a state where drive torque output from the internal combustion engine is transmitted to the drive wheels.

2. The control device according to claim 1, wherein the electronic control unit is configured to converge the engine speed to the first target idling speed set by the engine speed control, by controlling ignition timing of the internal combustion engine such that the ignition timing when the first idling control is executed is advanced with respect to the ignition timing when the second idling control is executed.

3. The control device according to claim 2, wherein the electronic control unit is configured to set a maximum retardation degree such that the maximum retardation degree when the first idling control is executed is smaller than the maximum retardation degree when the second idling control is executed, the maximum retardation degree being a maximum value of a retardation degree by which the ignition timing is retarded with respect to reference ignition timing obtained based on an operating condition of the internal combustion engine.

4. The control device according to claim 2 or 3, wherein:
the electronic control unit is configured to execute feedback control of the ignition timing such that the ignition timing converges to target ignition timing; and
the electronic control unit is configured to set a feedback gain used in the feedback control such that the feedback gain when the first idling control is executed is smaller than the feedback gain when the second idling control is executed.

5. A control method for a vehicle (1) including an internal combustion engine (10), drive wheels (30), and brake devices (40), the control method **characterized by** comprising:
executing braking force maintaining control for operating the brake devices;
executing first idling control for converging an engine speed to a first target idling speed while the vehicle is traveling;
executing second idling control for converging the engine speed to a second target idling speed while the vehicle is stopped;
restarting the internal combustion engine and executing the second idling control when executing the braking force maintaining control, while the vehicle is stopped;
restarting the internal combustion engine and executing the first idling control without executing the braking force maintaining control, while the vehicle is traveling; and
executing engine speed control for setting the first target idling speed to an engine speed higher than the second target idling speed, in a state where drive torque output from the internal combustion engine is transmitted to the drive wheels.
